(19) Europäisches Patentamt
European Patent Office
Office européen des brevets

(11) **EP 3 052 217 B1**

(12) **FASCICULE DE BREVET EUROPEEN**

(45) Date de publication et mention de la délivrance du brevet:
**16.06.2021 Bulletin 2021/24**

(21) Numéro de dépôt: **14790214.2**

(22) Date de dépôt: **01.10.2014**

(51) Int Cl.:
***B01D 53/047*** *(2006.01)*

(86) Numéro de dépôt international:
**PCT/FR2014/052488**

(87) Numéro de publication internationale:
**WO 2015/049462 (09.04.2015 Gazette 2015/14)**

(54) **PROCEDE D'ADSORPTION A MODULATION DE PRESSION AVEC REGULATION**

VERFAHREN ZUR DRUCKWECHSELADSORPTION MIT REGULIERUNG

METHOD OF PRESSURE SWING ADSORPTION WITH REGULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2013 FR 1359625**

(43) Date de publication de la demande:
**10.08.2016 Bulletin 2016/32**

(73) Titulaire: **L'Air Liquide Société Anonyme pour l'Etude et l'Exploitation des Procédés Georges Claude 75007 Paris (FR)**

(72) Inventeurs:
• **MONEREAU, Christian**
  **F-34000 Montpellier (FR)**
• **LEMAIRE, Yann-Pierrick**
  **F-91370 Verrières le Buisson (FR)**
• **TOULEMONDE, Louis**
  **F-59500 Douai (FR)**
• **SILVA, Paulo**
  **F-95000 Cergy (FR)**

(74) Mandataire: **Air Liquide**
**L'Air Liquide S.A.**
**Direction de la Propriété Intellectuelle**
**75, Quai d'Orsay**
**75321 Paris Cedex 07 (FR)**

(56) Documents cités:
**EP-A2- 1 114 666    FR-A1- 2 892 322**
**US-A- 4 693 730     US-A- 5 407 465**

**Description**

La présente invention concerne un procédé de traitement d'un gaz par adsorption, du type dans lequel on utilise une unité de traitement par adsorption à modulation de pression, couramment appelé unité PSA (pour « Pressure Swing Adsorption »), et dans lequel on régule ladite unité via les équilibrages et/ou le gaz d'élution.

Les unités PSA sont couramment utilisées pour la séparation et/ou la purification de gaz de charge, notamment dans les domaines de la production d'hydrogène, d'hélium, de dioxyde de carbone, du séchage, de la séparation des constituants de l'air, etc.

Les unités « PSA-H2 » qui produisent de l'hydrogène sensiblement pur sont utilisées avec des gaz de charge d'origine variée, formés par exemple de gaz issus de reformage à la vapeur, de raffinerie ou de four à coke, ou bien formés de gaz résiduaires d'unités de production d'éthylène ou de styrène, ou d'unités de séparation cryogénique hydrogène-monoxyde de carbone.

De manière générale, une unité PSA est constituée de plusieurs adsorbeurs qui suivent en décalage dans le temps un cycle de fonctionnement, par la suite appelé par commodité « cycle PSA » qui est réparti uniformément en autant de temps de phase qu'il y a d'adsorbeurs en fonctionnement, et qui est formé d'étapes de base, à savoir les étapes :

- d'adsorption à sensiblement une haute pression du cycle ;
- de dépressurisation à co-courant, généralement depuis la haute pression du cycle ;
- de dépressurisation à contre-courant, généralement jusqu'à la basse pression du cycle ;
- d'élution à sensiblement la basse pression du cycle ; et
- de repressurisation, depuis la basse pression du cycle jusqu'à la haute pression du cycle.

La dépressurisation à co-courant comprend généralement une ou plusieurs étapes d'équilibrage et au moins une étape d'alimentation-purge (Purge Providing) qui fournit du gaz d'élution.

La repressurisation comprend généralement les étapes d'équilibrage correspondantes et une repressurisation finale avec du gaz de production ou du gaz d'élution.

Ces étapes définissent les pressions caractéristiques du PSA.

La Figure 1 correspond à un cycle à 3 équilibrages complets, les pressions de fin d'équilibrage pour l'adsorbeur en dépressurisation étant respectivement P1, P2, P3 et P'1, P'2, P'3 pour l'adsorbeur en repressurisation avec égalité entre ces pressions (P1 = P' 1.....).

Le gaz d'élution est extrait pour sa part entre P3 et P4.

La Figure 2 correspond à un cycle comportant des équilibrages incomplets caractérisés par un écart de pression résiduel en fin d'étapes entre l'adsorbeur se dépressurisant et l'adsorbeur se repressurisant : DP1, DP2, DP3.

La Figure 3 correspond à un cycle ou l'étape d'alimentation-purge est simultanée avec l'équilibrage 3. Le gaz issu de la dépressurisation entre P2 et P3 est réparti entre élution et équilibrage. Dans le cas d'étape simultanée, le ratio de gaz affecté à l'élution est un paramètre important.

L'étagement des pressions P1, P2, P3, P4... entre la pression haute et la pression basse du cycle est une des caractéristiques importantes du cycle qui fixent ses performances.

Elles déterminent en effet les quantités de gaz échangées entre adsorbeurs et la quantité de gaz d'élution. A ce titre, elles jouent à la fois sur le rendement d'extraction du PSA et sur la productivité de l'adsorbant, et par là sur l'investissement.

Par la suite, on s'intéresse au fonctionnement d'une unité PSA en régime établi, c'est-à-dire en dehors de périodes transitoires de démarrage ou d'arrêt de l'unité qui correspondent généralement à des cycles spéciaux élaborés à cet effet.

La contrainte principale de fonctionnement d'une unité PSA en régime établi consiste en le niveau de pureté du produit. Sous cette condition de fonctionnement, les performances de traitement d'une unité PSA sont alors généralement optimisées soit pour maximiser le rendement d'extraction (quantité de gaz produit/quantité de ce gaz présent dans le gaz de charge), soit pour minimiser l'énergie consommée ou plus généralement pour réduire les frais d'exploitation, soit pour minimiser l'investissement.

On obtient de la sorte un cycle nominal de fonctionnement de l'unité PSA, déterminé directement en fonction des conditions nominales de fonctionnement (débit du gaz de charge, débit du gaz traité, composition du gaz de charge, température de fonctionnement de l'unité, pressions...)

On connaît du document US 5 407 465 A, un procédé PSA comportant une régulation du cycle en fonction de profils de température.

Lorsque les conditions de fonctionnement s'écartent des conditions nominales, on a proposé jusqu'à présent de réguler le fonctionnement de l'unité PSA en ajustant un ou plusieurs paramètres du cycle nominal de façon à garantir que les performances de traitement restent supérieures à des limites minimales prédéfinies. Deux régulations qui relèvent de cette approche sont :

- la régulation « de capacité » qui consiste à modifier la durée du temps de phase du cycle en fonction de la variation du débit de gaz de charge ; et
- la régulation « sur le contrôle de pureté » qui consiste à modifier ce temps de phase en fonction de la pureté du gaz traité.

Il convient ici de définir ce qu'on entend par temps de cycle et temps de phase (ou plus simplement phase).

Comme on l'a décrit plus haut, un adsorbeur va donc commencer une période d'adsorption jusqu'à ce qu'il soit chargé dans le ou les constituants à arrêter à la pression haute puis va être régénéré par dépressurisation et extraction des composés adsorbés avant d'être remis en état pour recommencer une nouvelle période d'adsorption. L'adsorbeur a alors effectué un "cycle de pression" et le principe même du procédé PSA est d'enchaîner ces cycles les uns après les autres ; il s'agit donc d'un procédé cyclique. Le temps que met un adsorbeur pour revenir dans son état initial est appelé temps de cycle. Par principe, chaque adsorbeur suit le même cycle avec un décalage temporel qu'on appelle temps de phase ou plus simplement phase. On a donc la relation :

$$\text{Temps de phase} = \text{temps de cycle} / \text{Nombre d'adsorbeurs}$$ et on voit que le nombre de phases est égal au nombre d'adsorbeurs.

Le nombre N d'adsorbeurs peut être quelconque, mais généralement, N est compris entre 2 et 32, plus typiquement entre 4 et 16.

Il y a en pratique un grand nombre de possibilités pour réaliser la double régulation (capacité, pureté) dont le résultat est de faire fonctionner le PSA à la fois dans de bonnes conditions de pureté et rendement. Généralement, les variations de débit modifient le temps de cycle au premier ordre et l'analyse vient en correction. Les actions des régulateurs sont à régler afin de s'assurer que la pureté sera maintenue. Les actions peuvent être dissymétriques, c'est-à-dire rapides et importantes si la pollution augmente et au contraire lentes et mesurées en cas de sur qualité de l'hydrogène. Pour mémoire, il existe différentes pratiques pour anticiper les variations de pureté de l'hydrogène comme de procéder à une analyse dans le lit d'adsorbant, par exemple à 95% du volume total, et non plus en sortie ou d'analyser le gaz pendant une des étapes à co-courant (équilibrages ou alimentation-purge (Purge Providing)).

Cette régulation de base qui assure les performances est généralement complétée par des régulations annexes. En effet, la modification du temps de cycle pour adapter le temps d'adsorption aux nouvelles conditions (débit, composition de l'alimentation...) conduit à ce que toutes les phases du cycle soient modifiées de la même façon. Suivant les cycles, on peut maintenir les étapes à leur durée initiale et compléter jusqu'à la durée de la nouvelle phase, supposée ici rallongée, par un temps mort (avec ou sans fermeture des vannes suivant la configuration des circuits) ou en rallonger certaines. Afin de rendre les débits les plus réguliers possibles, on rallongera ainsi, si le cycle le permet, les étapes de décompression à contre-courant, d'alimentation-purge et de repressurisation.

En fin de compte, en marche stabilisée, supposée ici à débit d'alimentation réduit, on obtient une production à la pureté requise et au rendement nominal du cycle utilisé.

Néanmoins, il n'en reste pas moins vrai que l'unité fonctionnant dans ces nouvelles conditions est surdimensionnée par rapport à un dimensionnement qui aurait effectué spécifiquement sur ce cas. L'amortissement de l'investissement de départ est ramené à une production d'hydrogène inférieure et le coût spécifique est donc supérieur. Sur de longues périodes d'exploitation de l'unité, ce fonctionnement est économiquement mauvais.

L'objet de l'invention est de tirer partie de ce surdimensionnement pour améliorer les conditions économiques de la production, en particulier en augmentant le rendement d'extraction c'est-à-dire en produisant plus d'hydrogène commercialisable si c'est le débit d'alimentation qui se trouve limité pour une quelconque raison ou en réduisant la quantité de gaz d'alimentation nécessaire et par là par exemple la quantité consommée de gaz naturel pour générer le syngas produit via un SMR, si la production est fixée.

Une solution de l'invention est un procédé d'adsorption à modulation de pression (PSA) pour produire un flux gazeux enrichi en un composé X à partir d'un flux gazeux d'alimentation, mettant en œuvre au moins 2 adsorbeurs, chaque adsorbeur étant soumis à un cycle de pression présentant une pression haute et une pression basse et comprenant les étapes successives suivantes :

a) adsorption à la pression haute du cycle avec production du flux gazeux enrichi en composé X
b) dépressurisation jusqu'à la pression basse du cycle avec production d'au moins une partie d'un gaz d'élution,
c) élution à la pression basse au moyen du gaz d'élution
d) repressurisation jusqu'à la pression haute

caractérisé en ce que :

- le cycle de pression présente un temps de phase correspondant à la durée d'un cycle de pression divisé par le nombre d'adsorbeurs,
- ledit procédé comprend une régulation au cours de laquelle on modifie en fonction des conditions opératoires du PSA une pression du cycle de pression située entre la pression haute et la pression basse du cycle de pression de manière à maintenir, pendant au moins une partie de la plage de variation des conditions opératoires, le temps de phase du PSA égal ou à ± 5% près au temps de phase nominal, correspondant au temps de phase du PSA dans les conditions de dimensionnement ;

avec les conditions opératoires du PSA choisies entre le débit d'alimentation, la composition du gaz d'alimentation, la pression basse, la pression haute, la concentration requise en composé X dans le flux gazeux enrichi et le débit requis du flux gazeux enrichi en composé X.

Autrement dit, la régulation permet de minimiser l'écart entre le temps de cycle réel et le temps de cycle nominal.

Selon le cas, le procédé selon l'invention peut présenter une ou plusieurs des caractéristiques suivantes :

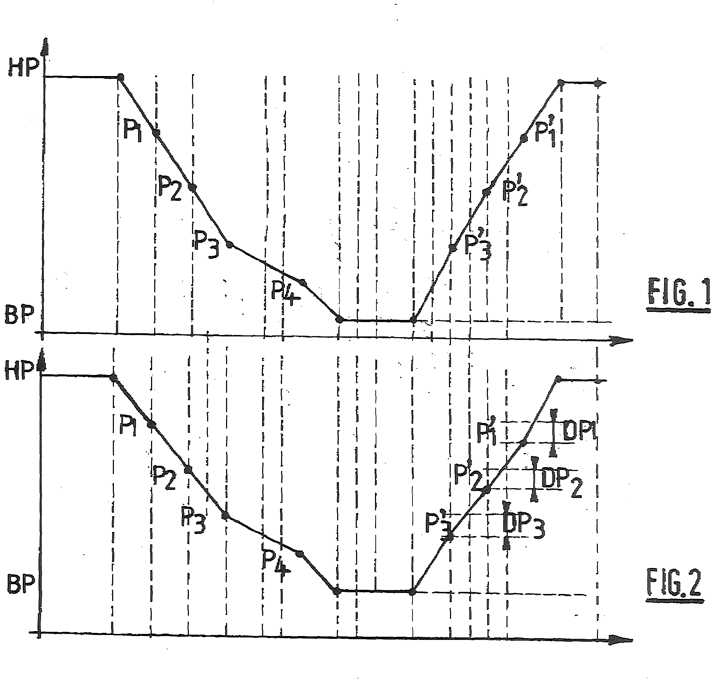

- le cycle de pression comprend au moins 1 équilibrage, et l'étape b) de dépressurisation comprend au moins une première sous-étape de dépressurisation à co-courant et au moins une seconde sous-étape de dépressurisation à contre-courant, et la pression modifiée du cycle de pression située entre la pression haute et la pression basse du cycle de pression est choisie entre les pressions de début ou fin d'équilibrage, les pressions de début ou fin de production du gaz d'élution, et la pression de début de dépressurisation à contre-courant ;
- on modifie la pression choisie du cycle de pression située entre la pression haute et la pression basse du cycle de pression via au moins un des écarts de pression résiduels en fin d'équilibrage. Les consignes correspondant aux DP1, DP2... (voir Figure 2) sont alors calculées selon la nouvelle régulation ;
- on modifie au moins une des pressions de début ou fin d'une au moins des étapes de production du gaz d'élution, changeant ainsi la quantité et/ou la qualité du gaz d'élution. Notons que le gaz issu de la dépressurisation est de moins en moins riche en composé X au fur et à mesure de la baisse de pression. En jouant sur les pressions, on peut donc à la fois modifier la quantité de gaz prélevé et sa composition et avoir un double effet sur l'efficacité de l'élution.
- le gaz d'élution comprend une fraction d'un flux gazeux issu de la dépressurisation d'un adsorbeur et une fraction du flux gazeux enrichi en composé X ou une fraction riche en composé X provenant d'une autre unité.

Les exemples décriront plus en détail la plage de variation des conditions opératoires durant laquelle l'étape de régulation contrôle le PSA. Pour aider à la compréhension, on peut dire que la nouvelle régulation va par exemple être pleinement opérante entre un débit de 100% et un débit de 60% du gaz d'alimentation, conduisant ainsi à une amélioration continue du rendement. Pour un débit de 60%, le PSA va atteindre ses performances maximales possibles. Pour un débit d'alimentation plus faible, mettons de 60 à 30% du débit nominal d'alimentation, cette nouvelle régulation n'apporte rien de plus et il convient d'utiliser alors la régulation classique.

En pratique, seul le débit de gaz d'alimentation qui peut effectivement varier dans des plages très importante peut conduire généralement à ce cas de fonctionnement. Pressions, température, composition ont des effets moindre que la nouvelle régulation peut prendre en compte sur toute la plage de variation.

- le temps de phase est maintenu constant d'un cycle à l'autre, pendant au moins une partie de la plage de variation des conditions opératoires.
- le cycle de pression comprend 1 à 6 équilibrages, typiquement de 2 à 5.
- le composé X est de l'hydrogène.
- le composé X est un composé moins adsorbable que le CO2, préférentiellement le CO, le CO2 étant produit au cours de la décompression et/ou l'élution.

Le procédé selon l'invention peut en effet s'appliquer à des PSA dont le produit valorisé est extrait en basse pression. Le principe de régulation va alors généralement conduire à produire la fraction basse pression plus pure.

Les « conditions nominales » peuvent être définies comme l'ensemble des conditions fixées par le client qui déterminent le dimensionnement de l'unité et ses performances.

Pour un PSA H2 par exemple, on va retrouver la composition du gaz d'.alimentation, la pureté requise pour l'H2, le débit de production, la pression du gaz d'alimentation, la pression de la production (ou la perte de charge maximale à travers l'unité), la pression minimale pour le gaz résiduaire. A ces paramètres principaux, peuvent se rajouter d'autres conditions qui vont conduire à éventuellement devoir surdimensionner certains équipements (fluctuation maximale de la composition du gaz de régénération pouvant déterminer la taille de la capacité de gaz résiduaire par exemple). A noter qu'un rendement minimum d'extraction en H2 peut faire partie des données de dimensionnement: il fixera alors le nombre minimum d'équilibrages à prévoir dans la détermination du cycle du PSA.

Au lieu d'une composition précise du gaz d'alimentation, il peut être indiqué des plages de composition pour chaque constituant. C'est alors du ressort de la personne faisant le dimensionnement de déterminer la composition la plus contraignante pour le PSA.

En pratique, le PSA va être opéré suivant des conditions réelles qui peuvent être assez différentes des conditions nominales (de dimensionnement). En effet, la composition du gaz d'alimentation, son débit, sa température, les pressions qui dépendent des conditions d'exploitation d'autres unités (comme un steam reforming), de l'état de maintenance d'équipements (échangeur, réacteur) ou de la matière première initiale (composition d'un charbon, teneur en azote d'un gaz naturel...) ont peu de chance d'être toutes égales aux prévisions. On constate généralement que le Client a tendance à cumuler les conditions les plus contraignantes (débit maximum par exemple correspondant à une configuration exceptionnelle des unités amont, telle qu'un catalyseur neuf dans un réacteur, des conditions atmosphériques exceptionnellement favorables...) pour définir le cahier des charges du PSA.

Il est donc fréquent d'avoir des conditions opératoires plus favorables.

L'invention va être maintenant décrite plus en détail à partir des deux cas suivants, le premier correspondant à une unité PSA H2 standard quant au cycle et à la régulation de base, le second étant régulé selon l'invention.

On choisit à titre d'exemple, et de façon se voulant non limitative, un cycle PSA 7.1.3, c'est-à-dire avec 7 adsorbeurs, un seul simultanément en production et 3 équilibrages de pression.

La représentation retenue ci-dessous consiste pendant le temps d'une phase à montrer la situation des 7 adsorbeurs.

Il est alors possible, si nécessaire, de construire le cycle complet en complétant chaque ligne par les étapes suivantes.

Tableau 1

| Ads | Ads |
|---|---|
| Ed1 (dp1=1 bar) | Ed2 (dp2=1 bar) |
| Ed3 (dp3 = 1 bar) | PP |
| PP | BD |
| P | P |
| Eup3 | Eup2 |
| Eup1 + Rep | Rep |

En pratique, lorsqu'un adsorbeur a fini sa phase de production à la Pression Haute du cycle (Ads), il est dépressurisé via les équilibrages de pression Ed1 et Ed2, puis via un $3^{ème}$ équilibrage Ed3, une première étape d'alimentation purge (PP). La phase suivante consiste en une étape complémentaire d'alimentation purge, de manière que du gaz d'élution soit produit sur la durée complète d'une phase et en l'étape de décompression à contre-courant.

La phase suivante est dédiée à l'étape d'élution. La phase qui suit correspond aux équilibrages à pression montante Eup 3 et 2 et la dernière phase consiste en le dernier équilibrage Eup1 et en la repressurisation finale par la production (il est également possible de repressuriser via le gaz d'alimentation). On notera qu'on a choisi de repressuriser pendant toute la durée de la phase, donc simultanément avec le premier équilibrage, afin d'assurer un débit de production constant. Cela limite un peu le gaz récupéré lors du premier équilibrage (Ed1) et par là diminue légèrement le rendement d'extraction en H2.

Dans ce cycle, les 3 équilibrages sont dits incomplets car l'échange de gaz entre l'adsorbeur à pression élevé et l'adsorbeur à plus basse pression est interrompu avant d'atteindre l'équilibrage total des pressions.

Le fait d'interrompre l'équilibrage de pression avant l'équilibre peut avoir un certain nombre d'intérêt. Ici, il correspond à un compromis optimum compte tenu des données économiques entre investissement et performances du PSA.

On sait en effet que pour les PSA H2 au moins, augmenter le nombre d'équilibrages, à priori jusqu'à 4 ou 5 si les conditions de pression haute et basse le permettent comme c'est le cas habituellement pour les unités traitant un syngas issu par exemple d'une unité SMR aux environs de 25 à 30 bar abs et dont le gaz résiduaire est utilisé en basse pression (environ 1.3 bar abs) pour alimenter les brûleurs du SMR, permet d'augmenter le rendement d'extraction en H2. Ceci se fait au détriment de la productivité (et donc de l'investissement).

Ceci est d'ailleurs confirmé par la publication : « Parametric Study of a Pressure Swing Adsorption Process », AIChE 1999, Annual Meeting, Dallas, concernant la production d'hydrogène haute pureté à partir d'un gaz d'alimentation formé d'un mélange binaire méthane-hydrogène. Les cycles de pression utilisés sont similaires à ceux sus décrits. Il est indiqué que de passer de 1 à 3 équilibrages permet de gagner 2,5% sur le rendement mais au détriment d'une augmentation de 40% du volume d'adsorbant.

Une explication de cet effet est que plus il y a d'équilibrages, plus le front d'impuretés avance dans l'adsorbeur et qu'il faut augmenter son volume pour continuer de maintenir les impuretés à l'intérieur. A noter que le nombre d'équilibrage effectif n'est pas forcément un nombre entier (2 ou 3 par exemple) qui correspondrait au fait que chaque équilibrage soit complet mais peut correspondre par exemple à 0.75, 1.7 ou 2.5

Dans la caractérisation d'un PSA, par exemple un cycle 7.1.3, on retiendra que le chiffre 3 signifie qu'avec le skid de vannes et de tuyauterie et les liaisons entre adsorbeurs, on pourrait effectuer 3 équilibrages. Ces équilibrages peuvent pour maintes raisons ne pas être complets et dans la description de procédé, on parle plutôt d'équilibrages effectifs (par exemple 2.5 équilibrages). On parle d'augmenter le nombre d'équilibrages, par exemple passer de 2.5 à 2.8 pour signifier une augmentation des échanges de gaz entre adsorbeurs.

Les 2.5 ou 2.8 équilibrages peuvent être fait par un cycle à 3 équilibrages ou éventuellement à 4 équilibrages -au sens caractérisation de l'unité -si ceux-ci sont incomplets (DP résiduels importantes)

Une modification des équilibrages en cours de fonctionnement (plus ou moins de gaz échangé entre adsorbeurs va donc modifier à la fois la productivité et le rendement d'extraction.

Plus précisément, une augmentation du gaz échangé pendant ces équilibrages va en général (dans une très large zone de fonctionnement) augmenter le rendement et diminuer la productivité. Pour traiter la même quantité de gaz d'alimentation et produire à la même pureté, il conviendra d'accélérer le cycle pour compenser la baisse de productivité.

Un autre paramètre jouant sur les performances et l'investissement via la productivité est la quantité de gaz d'élution.

L'impact de la quantité de gaz d'élution, prélevé au cours des étapes d'alimentation purge (PP), sur les performances du procédé est également une donnée connue. A cet effet, il est classique d'utiliser le rapport d'élution P/F qui est le rapport (en mètres cube réels), c'est-à-dire dans les conditions opératoires de pression et température, de la quantité de gaz d'élution utilisée à la quantité de gaz d'alimentation entrée dans l'adsorbeur pendant le cycle. La Figure 2 de l'article AIChE susmentionné montre que l'optimum est obtenu pour un rapport 1,1 à 1,2.

Dans tous les cas, le fait que le rapport P/F doive être supérieur à 1 n'est pas limité aux PSA H2. Ainsi, dans l'ouvrage « Pressure Swing Adsorption » de Ruthven, Farooq, Knaebel, ce point est abordé, par exemple au paragraphe « Purge flow rate, Air drying, PSA Processes » du Chapitre 6, où il est expliqué que pour une unité PSA sécheur d'air, un rapport P/F de 1,15 est recommandé. Un rapport de 1 permet en théorie de faire reculer le front d'impuretés jusque là où il se trouvait avant adsorption. La capacité utile d'adsorption est alors minimum...

Des rapports de 1.2 à 1.4 vont conduire au contraire à évacuer plus d'impuretés pendant la phase de régénération et ainsi à augmenter la productivité au détriment du rendement.

La détermination du rapport d'élution d'une unité industrielle ou pilote peut-être réalisée à partir de la mesure des débits d'alimentation et d'élution du gaz. Elle peut être déterminée également à partir de logiciel de simulation de procédé PSA à la manière de ce qui a été fait dans l'article présenté à l'AIChE.

Dans les PSA H2 récents, le gaz d'élution provient d'une ou d'étapes multiples d'alimentation-purge situées au cours de la décompression, plus particulièrement à co-courant. Si la production de gaz d'élution a souvent lieu après le dernier équilibrage et avant la décompression à contre-courant, comme dans notre exemple, il existe de très nombreuses variantes : étape simultanée avec un ou plusieurs équilibrages, étape intercalée entre 2 équilibrages successifs, simultanée avec le début de la décompression à contre-courant...

Sur certains PSA, PSA H2 relativement anciens par exemple, ou pour d'autres types de séparation, le gaz d'élution peut provenir de la production, voire dans quelques cas particuliers être un gaz extérieur à l'unité. Dans notre cas, une telle élution d'appoint, complémentaire à celle effectuée par les gaz de dépressurisation, est toujours possible et sa présence éventuelle ne modifie pas l'objet de l'invention. Les calculs devront évidemment prendre ce débit additionnel en compte pour définir la nouvelle régulation.

De façon générale, la phase d'élution consiste à faciliter la désorption des impuretés et nettoyer la zone côté production en "faisant reculer le front d'impuretés". Augmenter la quantité de gaz d'élution va permettre de mieux éliminer les impuretés et donc d'avoir besoin d'un volume d'adsorbant moindre mais c'est au détriment de la production car cela consomme du gaz le moins adsorbable.

On notera que la qualité du gaz d'élution a également un effet sur la désorption des impuretés. Un gaz d'élution plus pur aidera au recul du front d'impureté et permettra donc de mieux régénérer l'adsorbant. De façon générale, le gaz issu de la dépressurisation à co-courant d'un adsorbeur est de moins en moins pur au fur et à mesure de la baisse de pression. En modifiant les pressions de début et/ou de fin de l'étape de production du gaz d'élution, on aura conjointement variation de la quantité de gaz et de la composition (qualité) de ce dernier.

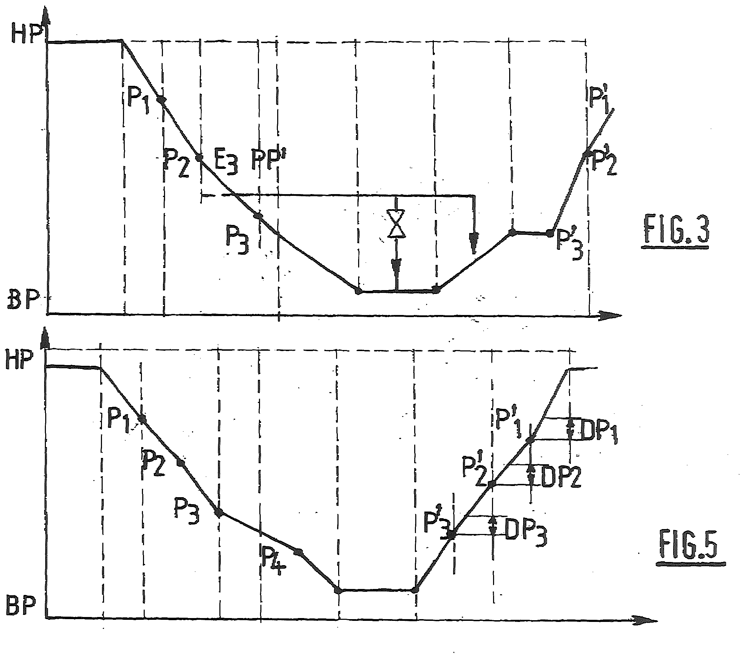

On notera ici que du fait de l'enchaînement des étapes de dépressurisation, modifier une pression revient généralement à modifier au moins deux échanges de gaz. En se référant par exemple à la Figure 5, on conçoit que décaler vers le bas la pression P3 de fin du 3ème équilibrage (en réduisant DP3) revient à augmenter la quantité de gaz échangé au cours de cet équilibrage et à diminuer la quantité de gaz d'élution (en supposant P4 inchangé).

Une régulation basée sur la détermination de P3 -ou DP3 - doit donc prendre en compte ces deux effets. Les programmes de simulation actuels sont capables de les intégrer et par là, il est possible de définir les algorithmes les mieux adaptés.

On notera que les progrès effectués dans la simulation de tels procédés PSA, en particulier la réduction du temps de calcul nécessaire pour arriver à une solution convergée, vont conduire prochainement à intégrer de tels logiciels dans le système de contrôle-commande pour calculer les paramètres optimaux de fonctionnement du PSA en temps réel en fonction des conditions opératoires. En particulier, dans notre cas, les points de consignes des pressions seront directement issus du calcul. Une telle évolution ne rendra que plus efficace et plus facile à mettre en œuvre ce nouveau principe de régulation

Dans le cas du PSA dont le cycle figure dans le tableau 1 et sur la figure Fig. 5, en fonction des conditions opératoires et des conditions économiques fixées par le Client, on a donc recherché sur le cas nominal, à l'aide de tests ou de simulations, un optimum économique qui va correspondre, par exemple pour ce PSA H2 à choisir le nombre d'adsorbeurs total (7), le nombre d'adsorbeur simultanément en adsorption (1), le nombre d'équilibrages (3), le rapport P/F...

Pour d'autres conditions de marche, par exemple à fonctionnement réduit, on utilisait jusqu'à présent les régulations décrites plus haut qui consiste à modifier le temps de phase pour maintenir la pureté recherchée.

De façon générale, le temps de phase d'un PSA de ce type est régulé via une relation du type :

$$Tph = TphN *( Dn/ D)* K1*K2*K3*Ki…*KM$$

Avec

- Tph: temps de phase réel (pour la phase en cours)
- TphN : temps de phase nominal (dimensionnement)
- DN : débit d'alimentation nominal
- D : débit actuel
- K1 coefficient pureté H2
- K2 coefficient conditions opératoires
- K3 coefficient lié aux opérations périodiques amont ou aval
- Ki
- KM : coefficient opérateur

Dans de nombreux cas, certains des coefficients K1...Ki ne sont pas utilisés et la régulation se limite à la correction en fonction des débits.

La première partie de la formule Tph = TphN *(Dn/ D) consiste à adapter le temps de phase au débit à traiter. Comme déjà dit, cela permet à l'adsorbant de traiter la même quantité de gaz d'alimentation durant chaque phase. On utilise généralement des Nm3 pour prendre en compte les débits via des débitmètres corrigés en pression, température et si nécessaire en masse volumique, cette dernière éventuellement déterminée par analyse.

Le coefficient K1 est le coefficient correcteur lié à la pureté. Il doit conduire à raccourcir le temps de phase en cas de risque de perte de la pureté et à le rallonger en cas de sur qualité.

Comme pour tous les paramètres, il existe plusieurs manières d'intégrer la pureté de l'hydrogène dans le calcul du temps de phase. L'exemple ci-dessous en décrit une, de façon non limitative pour un seuil d'impureté acceptable de 10 ppm.

Tableau 3

| Seuil de pureté | < 5 ppm | entre 5ppm et 8 ppm | entre 8 ppm et 10 ppm | entre 10 ppm et 11 ppm | < 11 ppm |
|---|---|---|---|---|---|
| K1 | 1,02 | 1,01 | 1,0 | 0,98 | 0,95 |

En pratique, il n'y a pas de correction entre 8 et 10 ppm d'impureté mesurée (K1=1.0). On corrige plus en cas de pollution (0.98 / 0.95) qu'en cas de sur pureté (1.01/1.02).

A cela, se rajoute éventuellement des temporisations avant que ladite correction soit effective, correspondant par exemple à un temps complet de cycle. Là également, on aura tendance à temporiser en cas de sur qualité et à corriger au plus vite en cas de risque de pollution.

La correction peut porter sur le temps de phase à venir ou éventuellement sur celui en cours si le procédé le permet.

Cette régulation peut être rendue inopérante par décision d'un opérateur, comme d'ailleurs la majorité des corrections.

Le coefficient K2 est lié à un paramètre opératoire du PSA mesuré de façon continu ou semi continu, susceptible de varier au cours du temps. Cela peut être, toujours par exemple non limitatif, la teneur en azote dans le gaz d'alimentation ou la basse pression de régénération. Par simulation, ou essais, on connait l'influence de ce paramètre sur les performances du PSA, en particulier sur la productivité et par là sur le temps de phase.

Une telle correction permet d'adapter immédiatement le temps de phase aux nouvelles conditions opératoires sans attendre que la pureté de l'hydrogène ne varie, ce qui peut prendre un certain nombre de cycles. Même si la correction n'est pas parfaite, cela limite les variations de la pureté H2.

Le coefficient K3 s'il existe prend en compte le fonctionnement d'unités amont ou aval qui ont un impact sur le fonctionnement du PSA. Un exemple correspond au cas où le débit d'alimentation du PSA sert périodiquement à régénérer une autre unité de traitement de gaz par adsorption. A un moment donné et pour une période connue, le gaz de charge va voir sa composition changer, par exemple dans le cas d'un PSA H2 dont le débit d'alimentation sert à régénérer un sécheur de syngas, avoir une teneur en CO plus importante. Là encore, l'idée est de prendre les devants et de corriger immédiatement le temps de phase pendant un temps donné.

Enfin KM, est la correction opérateur. Elle est généralement utilisée après avoir mis hors service la régulation sur la pureté. Pour disposer d'une marge importante sur la pureté de la production pendant une période où l'on craint par exemple des perturbations, l'opérateur décide de raccourcir le temps de phase pour assurer la pureté même au détriment du rendement d'extraction.

Comme on le voit ce type de régulation, déjà élaboré, permet de maintenir à la fois la pureté requise et le rendement. Il conduit à adopter pour le PSA un temps de phase plus long que le temps de phase nominal dés lors que les conditions de fonctionnement sont plus favorables.

On notera également :

- Qu'il peut être possible si le dimensionnement le permet, de raccourcir le temps de phase pour pouvoir traiter plus de débit quitte à perdre un peu de rendement dans une telle marche. Cette démarche peut être assez rapidement limitée par des contraintes de type mécanique comme vitesse d'attrition à travers les lits d'adsorbants, vannes -que ce soit une limitation du débit passant ou des temps de manœuvre- taille de la capacité de gaz résiduaire...
- Que tous les paramètres et coefficients sont prévus pour rester dans des plages définies avec diverses alarmes et éventuellement mises en sécurité.

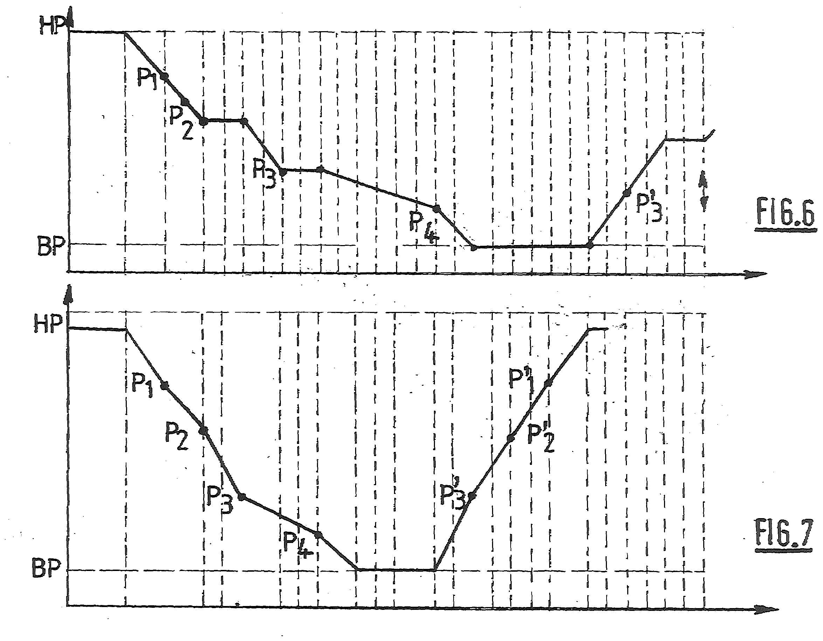

L'application de cette régulation permet alors d'obtenir le cycle de la Figure 6 qui est en fait un étirement sur l'axe du temps du cycle de départ. Les écarts de pression en fin d'équilibrage sont inchangés. L'étape de repressurisation étant plus longue, la coutume veut que l'on réduise le débit de repressurisation pour avoir le minimum de fluctuations.

En pratique, cela entraîne, via le déroulement du premier équilibrage une petite variation des pressions. De même, les débits étant plus faibles, les pertes de charge diminuent et cela modifie légèrement les pressions. En pratique, les pressions restent quasiment identiques à ces remarques près et il n'existe pas de régulation tendant à les modifier.

La régulation suivant l'invention quant à elle va permettre de tirer profit de l'écart entre temps de phase recalculé et temps de phase nominal pour augmenter les performances du PSA, en particulier le rendement d'extraction.

Comme pour la régulation de base, il existe de multiples manières de mettre cette nouvelle régulation en œuvre. La façon la plus simple de l'illustrer est de repartir de la régulation classique décrite plus haut.

Supposons que le résultat du calcul conduise à Tph = 1.18 TphN.

Dans un tel cas, on va pouvoir augmenter les équilibrages, et/ou réduire la quantité et/ou qualité de gaz d'élution, ce qui va conduire à faire avancer le front d'impuretés dans l'adsorbeur et/ou à moins bien régénérer l'adsorbant et par là à diminuer la productivité.

Dans les mêmes conditions d'alimentation, il faudra donc accélérer le temps de phase pour compenser cette diminution provoquée de la productivité mais en contre partie, on obtiendra une augmentation du rendement...

Par simulations ou par essais, il convient d'établir la relation entre productivité, nombre d'équilibrages et quantité/qualité d'élution. En intégrant cette modification dans la boucle de régulation, on va pouvoir conserver un temps de phase égal ou proche de TphN même dans un cas de marche plus favorable et produire plus (augmentation du rendement à alimentation constante).

Cette régulation sera opérationnelle sur une large plage de conditions de fonctionnement, en particulier pour des conditions opératoires plus favorables, mais au-delà d'un seuil, il conviendra d'en revenir à une régulation standard, c'est-à-dire augmenter le temps de phase.

Ce seuil peut correspondre par exemple au moment où tous les équilibrages seront complets et/ou le débit d'élution minimum.

A côté de ce type de régulation où chaque facteur agit en quelque sorte de façon séparée et dans lequel la consigne finale est le résultat d'une multiplication de calculs et/ou corrections, il existe des régulations où la totalité des données sont traitées simultanément via un ou des algorithmes donnant en réponse les caractéristiques de la régulation (temps de phase, ouverture des vannes...). On a évoqué également plus haut la possibilité future d'intégration d'un logiciel de simulation du PSA dans le système de régulation.

L'utilisation de tels systèmes ne remettent pas en cause l'intérêt de la régulation proposée mais au contraire peuvent en simplifier la mise en œuvre.

On notera que les échanges de gaz entre adsorbeurs lors des équilibrages ainsi que la quantité de gaz prélevé pour l'élution sont dans tous les cas contrôlés par des vannes de type tout ou rien avec réglage du débit passant lors du démarrage de l'unité ou par des vannes de contrôle dont l'ouverture est pilotée par le système de contrôle commande.

Des pressions de fin d'étape sont souvent le point de consigne des vannes pilotées.

Dans le cadre de l'invention, les vannes qui correspondront aux pressions que l'on souhaite modifier seront évidement des vannes de contrôle. Comme on vient de le dire, les points de consigne seront préférentiellement des pressions de fin d'étapes plutôt que des débits pour des questions de simplicité de mise en œuvre des régulations. Néanmoins, dans le principe, il y équivalence à réguler sur pression ou sur débit : le résultat est la quantité de gaz échangé ou prélevé. Quelle que soit la régulation choisie (sur pression ou sur débit), cela se traduit par une modification des pressions internes du PSA, critère choisi pour caractériser l'invention.

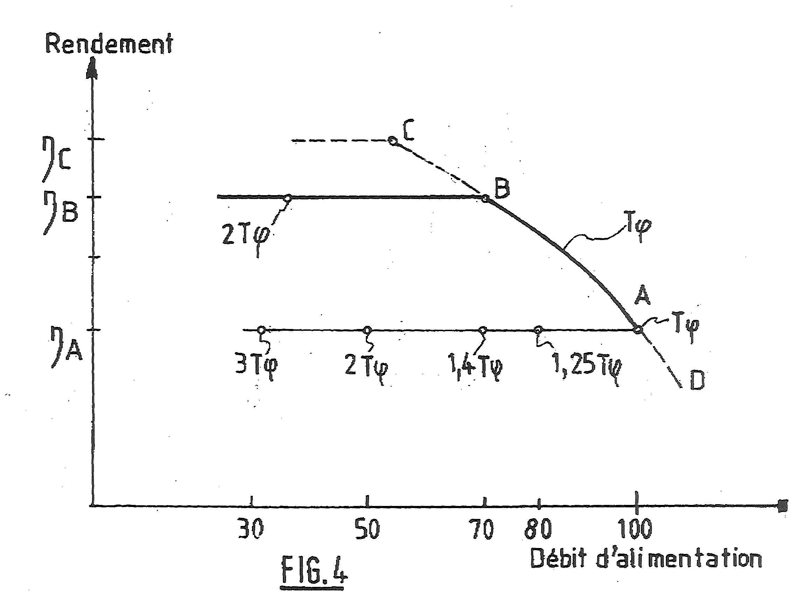

Le graphique de la Figure 4 illustre la différence entre la régulation standard et la régulation selon l'invention.

Le point de dimensionnement du PSA est le point A du graphique. Pour le débit nominal de gaz d'alimentation (100 en abscisse), on a optimisé l'unité PSA avec un temps de phase minimum $T\varphi$ - pour avoir le volume d'adsorbant minimum- et pour le rendement d'extraction requis $\eta A$.

Il n'y a pas lieu ici de rentrer dans le détail de la détermination du temps de phase optimal qui peut être basée sur la durée minimale requise pour une étape (à cause de la cinétique d'adsorption, des pertes de charge...) ou sur une suite d'étapes devant tenir dans un temps de phase.

La régulation classique va permettre de maintenir le rendement nominal $\eta A$ en augmentant le temps de phase inversement proportionnellement à la réduction du débit d'alimentation. Ainsi à 80% du débit nominal, le temps de phase va correspondre à 1.25 $T\varphi$, à 50% à 2 $T\varphi$, à 33% à 3 $T\varphi$.

La nouvelle régulation selon l'invention, correspond au trait épais de la même Figure 4.

On profite du surdimensionnement du PSA par rapport au point de dimensionnement occasionné par la réduction de débit pour utiliser un cycle de productivité plus faible et de rendement plus élevé. Pour ce faire, on augmente les équilibrages, on réduit la quantité de gaz d'élution. On se déplace sur la courbe AB du graphique à temps de phase constant $T\varphi$ avec un rendement augmentant jusqu'à atteindre $\eta B$ pour un débit de 70% du débit nominal.

Dans ce cas, on obtient le cycle de la Figure 7 avec 3 équilibrages complets. On a ici maintenu la pression P4 de fin de production de gaz d'élution inchangée mais en pratique, celle-ci pourrait être éventuellement modifiée par la régulation si cela permettait d'améliorer les performances.

Dans l'exemple donné, en dessous de 70% du débit, on en revient à une régulation classique, c'est-à-dire qu'on va augmenter le temps de phase, mais cela va permettre de maintenir le rendement maximum $\eta B$ et non le rendement de dimensionnement, inférieur, $\eta A$.

Suivant les conditions du dimensionnement, le point B peut correspondre au cas où la quantité de gaz d'élution devient trop faible pour pouvoir assurer la pureté recherchée pour la production (en deçà, les performances chutent et n'offrent pas d'intérêt) ou au moment où tous les équilibrages sont complets.

Il convient ici de faire un certain nombre de remarques.

Se placer sur la courbe AB est normalement l'optimum car on tire complètement partie du surdimensionnement qu'on transforme en rendement. Il est bien sûr possible d'utiliser un chemin intermédiaire entre les deux régulations décrites en n'utilisant qu'une fraction du surdimensionnement dans le but d'augmenter le rendement et d'ajuster en même temps la pureté de la production à la pureté visée via une augmentation du temps de phase.

Le gain potentiel sur le rendement va dépendre du point choisi pour le dimensionnement.

Pour un PSA H2, il peut être de plusieurs pourcents dans le cas d'un rendement nominal moyen - par exemple passer de 86 à 88 %- ou de quelques dixièmes de pourcent dans le cas d'un rendement de départ déjà très élevé, par exemple de 89.1 à 89.5. On peut cependant remarquer que dans le second cas, il s'agit généralement d'unité produisant de gros débits d'hydrogène, plus de 100 000 Nm3/h, et que la production supplémentaire se compte en centaines de Nm3/h.

Inversement, si l'on part d'un rendement assez faible, on peut atteindre des gains en rendement très appréciables (point C de la Figure 4) ;

Le point D est mis pour mémoire. On peut généralement traiter plus de gaz d'alimentation que le débit nominal au prix d'une perte en rendement. La régulation selon l'invention, en ajustant la quantité de gaz d'élution, peut permettre également de trouver une meilleure solution que la simple réduction du temps de phase.

On a choisi le débit de gaz d'alimentation, plus particulièrement une réduction du débit traité, comme paramètre opératoire permettant de dégager une marge sur le volume d'adsorbant comme exemple le plus direct. On conçoit que d'autres paramètres peuvent avoir le même effet comme une pression basse inférieure à la pression basse nominale, ce qui facilite la régénération. De même, on peut avoir un gaz d'alimentation plus pur, des conditions de température ou de pression du gaz d'alimentation plus favorables...Dans ces cas, la correction liée à la pureté de l'hydrogène sera dans un premier temps généralement déterminante dans la régulation car la variation de ces paramètres opératoires (pressions, composition..) pourra ne pas être directement prise en compte dans la régulation mais seulement par les effets causés. En pratique, une baisse de la pression de régénération par exemple, à débit d'alimentation inchangé, va conduire pour maintenir la pureté requise à traiter un peu plus de gaz, c'est-à-dire à augmenter le temps de phase à débit d'alimentation constant. Cette augmentation de temps de phase va alors permettre de diminuer l'élution par la production pour en revenir au temps de phase nominal et ce faisant augmenter le rendement d'extraction.

Comme on l'a déjà dit, dans le cas de système de contrôle-commande plus sophistiqué, les caractéristiques de la régulation (la consigne des pressions par exemple) pourront être fixées à priori sans la nécessité d'un écart temps de phase réel / temps de phase nominal.

Le cycle de départ choisi comme exemple comprenait un écart de pression en fin de chacun des 3 équilibrages. On pourrait aussi bien être parti d'un cycle ne comportant qu'un seul équilibrage incomplet et l'adapter pour tendre vers uniquement des équilibrages complets.

Dans le cas de plusieurs équilibrages initialement incomplets, il conviendra de choisir en fonction du procédé la meilleure régulation (modification simultanée des trois DP ou modifications successives....)

Afin de mieux expliquer le principe de l'invention, on a pris le cas des PSA H2, procédé PSA qui a probablement connu le plus de développements ces dernières années du fait de son succès auprès de diverses industries consommatrices d'hydrogène.

On entend par là de l'hydrogène à une pureté supérieure à 95% mole, généralement supérieure à 98% mole et pouvant atteindre lorsque le procédé consommateur l'exige des puretés supérieure à 99.99%.

.Mais l'invention dans son principe même peut s'appliquer à priori à la totalité des cycles PSA au sens le plus général dès lors qu'il y a une relation entre nombre d'équilibrages et/ou quantité de gaz d'élution et le couple productivité / rendement...

Ainsi on peut envisager par exemple une unité PSA destinée à déballaster en $CO_2$ un gaz de haut fourneaux à l'oxygène pour le recycler tout en produisant du $CO_2$, à une pureté suffisante pour le séquestrer soit directement, soit après un traitement complémentaire (boîte froide, membrane, autre unité d'adsorption...).

Le cycle du PSA $CO_2$ peut comprendre des étapes supplémentaires telles qu'une étape de Rinse qui consiste à faire circuler à co-courant dans le lit d'adsorbant une fraction de la production de $CO_2$ à la pression de fin du dernier équilibrage afin de chasser de la zone d'entrée de l'adsorbant les constituants les plus légers (CO, CH4, H2, N2) pour récupérer ensuite lors du Blow down (dépressurisation à contre-courant) un effluent très enrichi en $CO_2$. On notera que le $CO_2$ peut être également extrait de l'adsorbeur pendant la phase d'élution - ou au moins pendant une partie de cette étape-suivante avec l'aide (éventuelle) d'une pompe à vide. On peut ainsi récupérer un gaz contenant plus de 80% mole de $CO_2$.

Le gaz récupéré en sortie lors de l'étape de Rinse est utilisé lors d'une étape de purge P pour repousser le $CO_2$ vers l'extrémité d'entrée de l'adsorbeur. Le gaz récupéré en sortie de purge est évacué à l'extérieur de l'unité ou recyclé dans le gaz d'alimentation.

Plus simplement, il peut s'agir de déballaster en $CO_2$ un gaz de haut fourneau classique (combustion à l'air) pour réinjecter le gaz appauvri en $CO_2$ dans le haut fourneau.

On aura soin de noter que dans ces derniers cas, le composant X produit à la haute pression sera un des constituants moins adsorbables que le $CO_2$, par exemple le CO.

Toute augmentation du rendement en CO, se traduit par plus de CO dans le gaz haute pression et donc moins de CO dans le gaz en basse pression, c'est-à-dire dans le $CO_2$ qui voit ainsi sa teneur augmentée.

L'invention dans son principe de tirer partie de conditions opératoires plus favorables que les conditions nominales pour augmenter le rendement en X produit en haute pression peut donc être également intéressante quand le produit valorisé est le produit extrait en basse pression.

Dans ce cas, le gain sera généralement une augmentation de la pureté de ladite production basse pression.

Parmi d'autres applications des PSA susceptibles d'utiliser la régulation selon l'invention, on peut citer de façon non limitative la production ou épuration d'hélium, la production d'oxygène, la production ou le déballastage d'azote, la séparation d'hydrocarbures, le séchage de gaz...

Les applications de base envisagées pour des PSA selon l'invention sont préférentiellement des unités traitant de gros débit, par exemple plus de 100 000 Nm3/h, avec des adsorbants classiques et des vannes usuelles. Les phases -au sens de la définition donnée précédemment- seront de durée préférentiellement égale à 10 secondes et plus, conduisant à des cycles de durée généralement supérieure à la minute et préférentiellement d'au moins 2 minutes.

Néanmoins, les cycles selon l'invention sont également bien adaptés aux nouvelles structures adsorbantes en cours de développement.

Par nouvelles structures, on entend adsorbants structurés. L'adsorbant ne se présente plus sous forme de particules millimétriques (billes, bâtonnets, concassés, pastilles...) mais avec des géométries plus complexes et des tailles de plusieurs centimètres voire de plusieurs dizaines de centimètres. Il peut s'agir de monolithes, de contacteurs à passages parallèles, d'ensemble de fibres en parallèle, de tissu adsorbant... Les temps de cycle sont alors généralement beaucoup plus courts de l'ordre de quelques secondes ou dizaines de secondes.

Il peut être alors particulièrement intéressant de conserver des durées d'étape, de phase, de cycle constantes (car très courtes et difficiles à ajuster) et de modifier un paramètre physique tel qu'une pression

## Revendications

1. Procédé d'adsorption à modulation de pression (PSA) pour produire un flux gazeux enrichi en un composé X à partir d'un flux gazeux d'alimentation, mettant en œuvre au moins 2 adsorbeurs, chaque adsorbeur étant soumis à un cycle de pression présentant une pression haute et une pression basse et comprenant les étapes successives suivantes :

   a) adsorption à la pression haute du cycle avec production du flux gazeux enrichi en composé X
   b) dépressurisation jusqu'à la pression basse du cycle avec production d'au moins une partie d'un gaz d'élution,
   c) élution à la pression basse au moyen du gaz d'élution
   d) repressurisation jusqu'à la pression haute

   **caractérisé en ce que** :

   - le cycle de pression présente un temps de phase correspondant à la durée d'un cycle de pression divisé par le nombre d'adsorbeurs,
   - ledit procédé comprend une régulation au cours de laquelle on modifie en fonction des conditions opératoires du PSA une pression du cycle de pression située entre la pression haute et la pression basse du cycle de pression de manière à maintenir, pendant au moins une partie de la plage de variation des conditions opératoires, le temps de phase du PSA égal ou à ± 5% près au temps de phase nominal, correspondant au temps de phase du PSA dans les conditions de dimensionnement ;

   avec les conditions opératoires du PSA choisies entre le débit d'alimentation, la composition du gaz d'alimentation, la pression basse, la pression haute, la concentration requise en composé X dans le flux gazeux enrichi et le débit requis du flux gazeux enrichi en composé X.

2. Procédé selon la revendication 1, **caractérisé en ce que** :

   - le cycle de pression comprend au moins 1 équilibrage, et
   - l'étape b) de dépressurisation comprend au moins une première sous-étape de dépressurisation à co-courant et au moins une seconde sous-étape de dépressurisation à contre-courant, et
   la pression modifiée du cycle de pression située entre la pression haute et la pression basse du cycle de pression est choisie entre les pressions de début ou fin d'équilibrage, les pressions de début ou fin de production du gaz d'élution, et la pression de début de dépressurisation à contre-courant ; et
   - le composé X est un composé moins adsorbable que le $CO_2$, préférentiellement le CO, le $CO_2$ étant produit au cours de la décompression et/ou l'élution.

3. Procédé selon la revendication 2, **caractérisé en ce que** l'on modifie la pression choisie du cycle de pression située entre la pression haute et la pression basse du cycle de pression via au moins un des écarts de pression résiduels en fin d'équilibrage.

4. Procédé selon la revendication 2, **caractérisé en ce que** l'on modifie au moins une des pressions de début ou fin d'une au moins des étapes de production du gaz d'élution, changeant ainsi la quantité et/ou la qualité du gaz d'élution.

5. Procédé selon l'une des revendications 1 à 4, **caractérisé en ce que** le gaz d'élution comprend :

   - une fraction d'un flux gazeux issu de la dépressurisation d'un adsorbeur et
   - une fraction du flux gazeux enrichi en composé X ou une fraction riche en composé X provenant d'une autre unité.

6. Procédé selon la revendication 1, **caractérisé en ce que** le temps de phase est maintenu constant d'un cycle à l'autre, pendant au moins une partie de la plage de variation des conditions opératoires.

7. Procédé selon l'une des revendications 1 à 6 **caractérisé en ce que** le cycle de pression comprend 1 à 6 équilibrages, typiquement de 2 à 5.

8. Procédé selon l'une des revendications 1 à 7, **caractérisé en ce que** le composé X est de l'hydrogène.

9. Procédé selon l'une des revendications 1 à 8, **caractérisé en ce que** le composé X est un composé moins adsorbable que le CO2, le CO2 étant produit au cours de la décompression et/ou l'élution.


**Patentansprüche**

1. Verfahren zur Druckwechseladsorption (PSA) zum Herstellen eines Gasstroms, der mit einer Verbindung X angereichert ist, aus einem Gaszustrom, bei dem mindestens 2 Adsorbentien eingesetzt werden, wobei an jedem Adsorbens ein Druckzyklus mit einem hohen Druck und einem niedrigen Druck durchgeführt wird, und das folgende aufeinanderfolgende Schritte umfasst:

a) Adsorption beim hohen Druck des Zyklus mit Herstellung des Gasstroms, der mit der Verbindung X angereichert ist,
b) Druckabsenkung bis auf den niedrigen Druck des Zyklus mit Herstellung von zumindest einem Teil eines Elutionsgases,
c) Elution bei dem niedrigen Druck mithilfe des Elutionsgases,
d) Druckaufbau bis auf den hohen Druck,

**dadurch gekennzeichnet, dass**:

- der Druckzyklus eine Phasendauer aufweist, die der Dauer eines Druckzyklus, geteilt durch die Anzahl an Adsorbentien, entspricht,
- das Verfahren eine Regelung umfasst, während der je nach den Betriebsbedingungen der PSA ein Druck des Druckzyklus zwischen dem hohen Druck und dem niedrigen Druck des Druckzyklus derart modifiziert wird, dass während zumindest eines Teils des Schwankungsbereichs der Betriebsbedingungen die Phasendauer der PSA bei gleich oder innerhalb von ±5% der Phasennenndauer bleibt, die der Phasendauer der PSA unter Auslegungsbedingungen entspricht;

wobei die Betriebsbedingungen der PSA unter dem Durchfluss des Zustroms, der Zusammensetzung des zugeführten Gases, dem niedrigen Druck, dem hohen Druck, der erforderlichen Konzentration an der Verbindung X in dem angereicherten Gasstrom und dem erforderlichen Durchfluss des mit der Verbindung X angereicherten Gasstroms ausgewählt werden.

2. Verfahren nach Anspruch 1, **dadurch gekennzeichnet, dass**:

- der Druckzyklus mindestens einen Druckausgleich umfasst, und
- der Schritt b) zur Druckabsenkung mindestens einen ersten Teilschritt zur Druckabsenkung im Gleichstrom und mindestens einen zweiten Teilschritt zur Druckabsenkung im Gegenstrom umfasst, und
der modifizierte Druck des Druckzyklus zwischen dem hohen Druck und dem niedrigen Druck des Druckzyklus aus dem Anfangs- oder Enddruck des Druckausgleichs, dem Anfangs- oder Enddruck der Herstellung des Elutionsgases und dem Anfangsdruck der Druckabsenkung im Gegenstrom ausgewählt ist; und
- die Verbindung X eine weniger stark adsorbierbare Verbindung als $CO_2$ ist, vorzugsweise CO, wobei $CO_2$ während der Druckverminderung und/oder der Elution erzeugt wird.

3. Verfahren nach Anspruch 2, **dadurch gekennzeichnet, dass** der ausgewählte Druck des Druckzyklus zwischen dem hohen Druck und dem niedrigen Druck des Druckzyklus über mindestens eine der Restdruckdifferenzen zum Ende des Druckausgleichs modifiziert wird.

4. Verfahren nach Anspruch 2, **dadurch gekennzeichnet, dass** der Anfangs- und/oder Enddruck von mindestens einem der Schritte zur Herstellung des Elutionsgases modifiziert wird, wodurch die Menge und/oder Qualität des Elutionsgases verändert wird bzw. werden.

**5.** Verfahren nach einem der Ansprüche 1 bis 4, **dadurch gekennzeichnet, dass** das Elutionsgas Folgendes umfasst:

- einen Anteil eines Gasstroms aus der Druckabsenkung eines Adsorbens und
- einen Anteil des mit der Verbindung X angereicherten Gasstroms oder einen Anteil mit einem hohen Gehalt an der Verbindung X, der aus einer anderen Einheit stammt.

**6.** Verfahren nach Anspruch 1, **dadurch gekennzeichnet, dass** die Phasendauer von einem Zyklus zum nächsten während zumindest eines Teils des Schwankungsbereichs der Betriebsbedingungen konstant gehalten wird.

**7.** Verfahren nach einem der Ansprüche 1 bis 6, **dadurch gekennzeichnet, dass** der Druckzyklus 1 bis 6, typischerweise 2 bis 5 Druckausgleichsvorgänge umfasst.

**8.** Verfahren nach einem der Ansprüche 1 bis 7, **dadurch gekennzeichnet, dass** die Verbindung X Wasserstoff ist.

**9.** Verfahren nach einem der Ansprüche 1 bis 8, **dadurch gekennzeichnet, dass** die Verbindung X eine weniger stark adsorbierbare Verbindung als $CO_2$ ist, wobei $CO_2$ während der Druckverminderung und/oder der Elution erzeugt wird.

**Claims**

**1.** Pressure swing adsorption (PSA) process for producing a gas stream enriched in a compound X from a feed gas stream, using at least 2 adsorbers, each adsorber being subjected to a pressure cycle having a high pressure and a low pressure and comprising the following successive steps:

a) adsorption at the high pressure of the cycle with production of the gas stream enriched in compound X,
b) depressurization to the low pressure of the cycle with production of at least one portion of an elution gas,
c) elution at the low pressure by means of the elution gas,
d) repressurization to the high pressure,

**characterized in that**:

- the pressure cycle has a phase time corresponding to the duration of a pressure cycle divided by the number of adsorbers,
- said process comprises a regulation during which, as a function of the operating conditions of the PSA, a pressure of the pressure cycle, located between the high pressure and the low pressure of the pressure cycle, is modified so as to keep, during at least one portion of the range of variation of the operating conditions, the phase time of the PSA equal to or within $\pm$ 5% of the nominal phase time, corresponding to the phase time of the PSA under the design conditions;

with the operating conditions of the PSA selected between the feed flow rate, the composition of the feed gas, the low pressure, the high pressure, the required concentration of compound X in the enriched gas stream and the required flow rate of the gas stream enriched in compound X.

**2.** Process according to Claim 1, **characterized in that**:

- the pressure cycle comprises at least 1 equalization, and
- the depressurization step b) comprises at least a first sub-step of co-current depressurization and at least a second sub-step of counter-current depressurization, and the modified pressure of the pressure cycle, located between the high pressure and the low pressure of the pressure cycle, is selected between the pressures at the start or end of equalization, the pressures at the start or end of production of the elution gas, and the pressure at the start of counter-current depressurization, and
- the compound X is a compound that is less adsorbable than $CO_2$, preferably CO, the $CO_2$ being produced during the blowdown and/or the elution.

**3.** Process according to Claim 2, **characterized in that** the pressure selected from the pressure cycle, located between the high pressure and the low pressure of the pressure cycle, is modified via at least one of the residual pressure differences at the end of equalization.

4. Process according to Claim 2, **characterized in that** at least one of the pressures at the start or end of one at least of the steps for production of the elution gas is modified, thus changing the quantity and/or the quality of the elution gas.

5. Process according to one of Claims 1 to 4, **characterized in that** the elution gas comprises:

   - a fraction of a gas stream resulting from the depressurization of an adsorber, and
   - a fraction of the gas stream enriched in compound X or a fraction rich in compound X originating from another unit.

6. Process according to Claim 1, **characterized in that** the phase time is kept constant from one cycle to the next, during at least one portion of the range of variation of the operating conditions.

7. Process according to one of Claims 1 to 6, **characterized in that** the pressure cycle comprises 1 to 6 equalizations, typically from 2 to 5.

8. Process according to one of Claims 1 to 7, **characterized in that** the compound X is hydrogen.

9. Process according to one of Claims 1 to 8, **characterized in that** the compound X is a compound that is less adsorbable than $CO_2$, the $CO_2$ being produced during the blowdown and/or the elution.

FIG.1

FIG.2

FIG.3

FIG.5

FIG.4

EP 3 052 217 B1

FIG.6

FIG.7

**EP 3 052 217 B1**

## RÉFÉRENCES CITÉES DANS LA DESCRIPTION

**Documents brevets cités dans la description**

- US 5407465 A

**Littérature non-brevet citée dans la description**

- Parametric Study of a Pressure Swing Adsorption Process. AIChE 1999. Annual Meeting, Dallas